# EUROPÄISCHE PATENTANMELDUNG

(11) **EP 4 789 887 A1**
(43) Veröffentlichungstag der Anmeldung: **12.08.2026**
(21) Anmeldenummer: 25155996.9
(22) Anmeldetag: 05.02.2025
(51) Int. Cl.: B60K 1/04

(54) **KRAFTFAHRZEUG MIT EINER HOCHVOLTBATTERIE**

(71) Anmelder: MAGNA STEYR Fahrzeugtechnik GmbH & Co KG, 8041 Graz (AT)
(72) Erfinder: ERLACHER, Manuel, 9545 Radenthein (AT); LIENHART, Christian, 8054 Seiersberg (AT); SCHWARZL, Werner, 8301 Laßnitzhöhe (AT); STADLER, Severin, 5350 Strobl (AT)
(74) Vertreter: Zangger, Bernd

(57) **Zusammenfassung**

Ein Kraftfahrzeug mit einer Hochvoltbatterie als Antriebsbatterie, wobei das Kraftfahrzeug zumindest einen Schweller (1) umfasst, wobei die Hochvoltbatterie ein Batteriegehäuse umfasst, wobei das Batteriegehäuse einen massiven Zellenträger (2) als Boden umfasst und einen Deckel (3) oberhalb des Zellenträgers (2), der mit dem Zellenträger (2) gasdicht verbunden ist, wobei der Zellenträger (2) des Batteriegehäuses mittels Verschraubungen (4) am Schweller (1) des Kraftfahrzeuges von unten befestigt ist, wobei der massive Zellenträger (2) eine Stufe (5) ausgeformt hat, so dass die Stufe (5) an der dem Fahrzeuginneren zugewandten Seite des Schwellers (1) zumindest einen Teilbereich der Höhe des Schwellers (1) überdeckend entlangläuft, wobei der Deckel (3) zumindest auf Höhe der Oberkante der Stufe (5) mit dem Zellenträger (2) gasdicht verbunden ist.

## Beschreibung

### Gebiet der Erfindung

Die vorliegende Erfindung betrifft ein Kraftfahrzeug mit einer Hochvoltbatterie als Antriebsbatterie und die Art der Befestigung der Hochvoltbatterie am Kraftfahrzeug.

### Stand der Technik

Es ist bekannt, dass Hochvoltbatterien in Kraftfahrzeugen verwendet werden, um elektrische Energie für einen Antriebsmotor eines Kraftfahrzeugs, insbesondere in Elektro- oder Hybridfahrzeugen, zur Verfügung zu stellen. Eine Hochvoltbatterie weist üblicherweise ein Batteriegehäuse auf, in welchem die Batteriezellen angeordnet sind. Das Batteriegehäuse kann einen massiven Zellenträger als Boden umfassen, der unmittelbar oder mittelbar die Zellen trägt, der zur Steifigkeit des Fahrzeugaufbaus beitragen kann und der zur Befestigung der Hochvoltbatterie am Fahrzeug genutzt werden kann.

Hochvoltbatterien nehmen ein relativ großes Volumen ein, um eine möglichst hohe Speicherkapazität aufweisen zu können und werden daher möglichst platzsparend, beispielsweise im Bereich des Fahrzeugbodens, verbaut.

Insbesondere ist es bekannt, eine Hochvoltbatterie unterhalb einer Bodenplatte eines Kraftfahrzeugs anzuordnen und an den seitlichen Schwellern, also Längsträgern des Kraftfahrzeugs zu befestigen. Die Antriebsbatterien werden in der Montage von unten, mittels Schrauben an den Schwellern verschraubt. Dazu sind die Muttern der Schrauben üblicherweise im Schweller angeordnet.

Ein derartiges Kraftfahrzeug mit einer Hochvoltbatterie deren Zellenträger an Schwellern von unten montierbar ist, ist beispielsweise aus der DE102021109394A1 bekannt.

Aus Toleranzgründen muss üblicherweise ein ausreichend großer Spalt zwischen einer Schwellerkontur und dem Batteriegehäuse vorhanden sein um ein problemloses Verbauen der Batterie zu ermöglichen. Durch unterschiedliche Bauweisen der Batteriestruktur sowie der Anordnung des Deckels können dabei verschieden breite Spalte entstehen.

Bei einer Deformation durch äußere Einwirkung, zum Beispiel durch einen seitlichen Crash, kann dieser Spalt zusammengedrückt werden, so dass der Schweller mit dem Batteriegehäuse auf Block geht. Die Kräfte wirken dann direkt auf das Batteriegehäuse. Die Bauteile werden örtlich stark verformt und es kann zum Brechen einzelner Batterieverschraubungen kommen.

Idealerweise sollte das Batteriegehäuse die auftretenden Kräfte sicher ableiten können, ohne zu stark zu deformieren, und ohne dass sich das Batteriegehäuse vom Fahrzeug löst.

### Zusammenfassung der Erfindung

Es ist eine Aufgabe der Erfindung, ein Kraftfahrzeug mit einer Hochvoltbatterie als Antriebsbatterie in dieser Hinsicht zu verbessern und insbesondere ein Kraftfahrzeug mit einer Hochvoltbatterie anzugeben, bei dem auftretende Kräfte bei einem seitlichen Aufprall gut abgeleitet werden, so dass die Sicherheit des Kraftfahrzeugs bei einem seitlichen Unfall erhöht ist.

Die Lösung der Aufgabe erfolgt durch ein Kraftfahrzeug mit einer Hochvoltbatterie als Antriebsbatterie, wobei das Kraftfahrzeug zumindest einen Schweller umfasst, wobei die Hochvoltbatterie ein Batteriegehäuse umfasst, wobei das Batteriegehäuse einen massiven Zellenträger als Boden umfasst und einen Deckel oberhalb des Zellenträgers, der mit dem Zellenträger gasdicht verbunden ist, wobei der Zellenträger des Batteriegehäuses mittels Verschraubungen am Schweller des Kraftfahrzeuges von unten befestigt ist, wobei der massive Zellenträger eine Stufe ausgeformt hat, so dass die Stufe an der dem Fahrzeuginneren zugewandten Seite des Schwellers zumindest einen Teilbereich der Höhe des Schwellers überdeckend entlangläuft, wobei der Deckel zumindest auf Höhe der Oberkante der Stufe mit dem Zellenträger gasdicht verbunden ist.

Erfindungsgemäß ist ein massiver Zellenträger einer Hochvoltbatterie, der von unten an einem Schweller, bevorzugt an beiden Schwellern links und rechts am Fahrzeug, befestigt ist, selbst so ausgebildet, also geformt, dass er eine Stufe aufweist, die an dem Schweller entlangläuft. Die Stufe reicht zumindest in die Höhe des Schwellers hinein. Die Befestigung des Deckels am Zellenträger liegt, vom Schweller her gesehen, hinter der Vorderkante der Stufe.

Die Stufe ist direkt in den Zellenträger integriert und stützt den Schweller im Falle eines Seitencrash früher an der Batteriekontur ab als bei einer Bauweise ohne Stufe. Durch die Einbringung einer Stufe im Zellenträger kann der Verbund Schweller mit Batteriegehäuse früher auf Block gehen, und dadurch beispielsweise Befestigungsschrauben für die Batterie entlasten. Durch diese Anordnung kann ein frühzeitiges Brechen von Schrauben im Crash Fall verzögert oder verhindert werden. Weiters können dadurch auch Befestigungselemente eingespart werden, und die Stufe kann die fehlenden Schraubverbindungen für bestimmte Lastfälle kompensieren.

Der Deckel ist zumindest auf Höhe der Oberkante der Stufe mit dem Zellenträger gasdicht verbunden. Bevorzugt ist der Deckel an der Oberkante der Stufe mit dem Zellenträger gasdicht verbunden, vorzugsweise unmittelbar verbunden, abgesehen von bevorzugt vorhandenem Dicht- und/oder Befestigungsmaterial zwischen Zellenträger und Deckel.

Bevorzugt ist zumindest eine, vorzugsweise sind mehrere Verschraubungen, mittels welcher der Zellenträger des Batteriegehäuses am Schweller des Kraftfahrzeuges von unten befestigt ist, neben der Stufe angeordnet.

Der Deckel ist bevorzugt mit der Oberkante der Stufe des Zellenträgers gasdicht verschraubt.

Bevorzugt läuft die Stufe zumindest einen Teilbereich der Höhe des Schwellers derart überdeckend entlang, dass die Oberkante der Stufe etwa auf der Höhe der Oberkante zumindest einer Verschraubung, bevorzugt mehrerer Verschraubungen, mittels welcher der Zellenträger des Batteriegehäuses am Schweller des Kraftfahrzeuges von unten befestigt ist, liegt oder höher ist. Die Verschraubungen des Zellenträgers des Batteriegehäuses am Schweller weisen bevorzugt eine oben, vorzugsweise im Schweller, liegende Schraubenmutter auf, die bevorzugt zumindest teilweise, fast vollständig oder vollständig von der Stufe des Zellenträgers seitlich abgedeckt ist.

Die Stufe kann sich bevorzugt bis zu einer Höhe von etwa 5 % bis 60 % der Höhe des Schwellers erstrecken, vorzugsweise zwischen 10 % und 30% der Höhe des Schwellers.

Bevorzugt weist der Zellenträger eine weitere Stufe auf, die vom Ende der ersten Stufe aus noch weiter nach oben führt und die an der dem Fahrzeuginneren zugewandten Seite der ersten Stufe ausgebildet ist. Die weitere Stufe verläuft bevorzugt an der dem Fahrzeuginneren zugewandten Seite des Deckels entlang, liegt also vorzugsweise im Inneren des Batteriegehäuses. Von der Befestigungsebene des Zellenträgers ausgehend bilden somit die Stufe und weitere Stufe eine zweistufige Treppe.

Der Zellenträger kann als Aluminium-Druckgussbauteil ausgebildet sein.

Der Deckel ist zumindest seitlich, im Bereich der beiden Schweller links und rechts am Fahrzeug, vorzugsweise auch vorne und hinten am Fahrzeug, nach unten gezogen, so dass er die Seitenwände des Batteriegehäuses ausbildet. Der Deckel bildet dann bevorzugt eine nach unten offene Wanne. Die Seitenwände des Deckels sind bevorzugt unmittelbar mit dem Zellenträger gasdicht verbunden.

Der Schweller ist bevorzugt ein Aluminium-Druckgussbauteil. In einer anderen Ausführungsform ist der Schweller ein Stahlbauteil und vorzugsweise aus Stahlprofilen aufgebaut. In beiden Varianten erfolgt die Befestigung des Zellenträgers am Schweller bevorzugt über Schrauben, die über eine Hülse im Zellenträger gelagert sein können, so dass ein Toleranzausgleich in der X-Y Ebene des Kraftfahrzeugs möglich ist. Eine Schraubenmutter ist bevorzugt im Schweller angeordnet.

Bevorzugt weist das Kraftfahrzeug in Y-Richtung sowohl links als auch rechts am Fahrzeug Schweller auf, die sich in X-Richtung des Kraftfahrzeug, also in Längsrichtung erstrecken. Bevorzugt ist sowohl links als auch rechts jeweils eine derartige Stufe, wie zuvor beschrieben, im Zellenträger ausgebildet.

### Kurzbeschreibung der Zeichnungen

Die Erfindung wird im Folgenden beispielhaft unter Bezugnahme auf die Zeichnungen beschrieben.
- Fig. 1: ist eine Schnittansicht eines nicht erfindungsgemäßen Kraftfahrzeugs mit einer Hochvoltbatterie, im Bereich der Befestigung eines Zellenträgers der Hochvoltbatterie an einem Schweller des Kraftfahrzeugs.
- Fig. 2: ist eine Schnittansicht eines erfindungsgemäßen Kraftfahrzeugs mit einer Hochvoltbatterie, im Bereich der Befestigung eines Zellenträgers der Hochvoltbatterie an einem Schweller des Kraftfahrzeugs.
- Fig. 3: ist eine Schnittansicht eines weiteren nicht erfindungsgemäßen Kraftfahrzeugs mit einer Hochvoltbatterie, im Bereich der Befestigung eines Zellenträgers der Hochvoltbatterie an einem Schweller des Kraftfahrzeugs.
- Fig. 4: ist eine Schnittansicht eines weiteren erfindungsgemäßen Kraftfahrzeugs mit einer Hochvoltbatterie, im Bereich der Befestigung eines Zellenträgers der Hochvoltbatterie an einem Schweller des Kraftfahrzeugs.

### Detaillierte Beschreibung der Erfindung

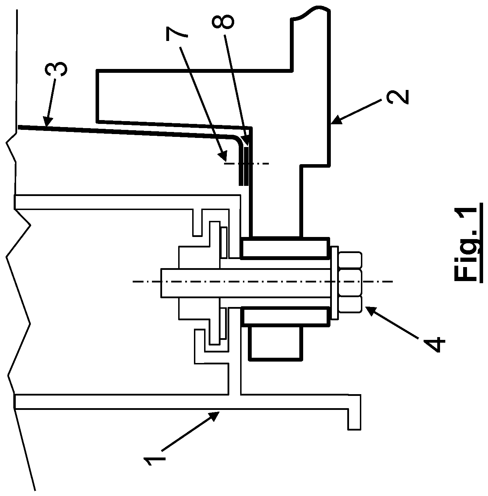

In der Fig. 1 ist ein nicht erfindungsgemäßes Kraftfahrzeug mit einer Hochvoltbatterie, im Bereich der Befestigung eines Zellenträgers 2 der Hochvoltbatterie an einem Schweller 1 des Kraftfahrzeugs dargestellt.

Bei dieser Anordnung besteht das tragende Hauptbauteil der Batterie aus einem einteiligen Aluminium-Druckgussbauteil, dem Zellenträger 2. Direkt auf dem Zellenträger 2 ist der Deckel 3 verschraubt und schließt das Batteriegehäuse nach oben hin ab. Zwischen dem Deckel 3 und dem Schweller 1 befindet sich ein Spalt. Im Bereich dieses Zwischenraums ist der Deckel 3 mittels einer Verschraubung 7 des Deckels am Zellenträger 2 verschraubt, und zwar auf Höhe der Unterkante des Schwellers 1. Bei einer seitlichen Krafteinwirkung wird der Schweller 1 über den Spalt verschoben, bis er zum Deckel 3 und einer dahinter ausgebildeten Erhöhung des Zellenträgers 2 gelangt und geblockt wird.

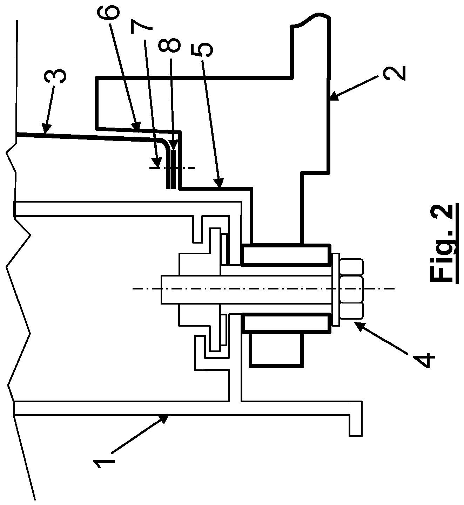

In der erfindungsgemäßen Ausführung der Fig. 2, umfasst das Kraftfahrzeug ebenfalls einen Schweller 1, der hier ein Druckgussbauteil aus Aluminium ist. Das Batteriegehäuse umfasst einen massiven Zellenträger 2 als Boden und einen Deckel 3 oberhalb des Zellenträgers 2, der mit dem Zellenträger 2 gasdicht verbunden ist. Der Zellenträger 2 des Batteriegehäuses ist mittels Verschraubungen 4 am Schweller 1 des Kraftfahrzeuges von unten befestigt.

Am massiven Zellenträger 2 ist eine Stufe 5 einstückig ausgebildet und somit ausgeformt, so dass die Stufe 5 an der dem Fahrzeuginneren zugewandten Seite des Schwellers 1 einen Teilbereich der Höhe des Schwellers 1 überdeckend entlangläuft. Der Deckel 3 ist auf Höhe der Oberkante der Stufe 5 mit dem Zellenträger 2 gasdicht verbunden, nämlich über eine Verschraubung 7 des Deckels 3 verschraubt. Zwischen dem Deckel 3 und dem Zellenträger 2 ist im Bereich der Verschraubung 7 des Deckels eine Dichtung 8 angeordnet.

Bei einem seitlichen Aufprall wird der Schweller 1 nicht bis zum Deckel 3 verschoben und überbrückt nicht den Spalt zwischen Schweller 1 und Deckel 3, sondern wird bereits vorher, an der Stufe 5 des Zellenträgers 2, geblockt. Die dem Schweller 1 zugewandte Kante der Stufe 5 liegt zwischen dem Schweller 1 und der Verschraubung 7 des Deckels 3 am Zellenträger 2 und somit vor dem Spalt zum Deckel 3 hin.

Die Stufe 5 ist direkt in den Zellenträger 2 integriert und stützt den Schweller 1 somit im Falle eines Seitencrash früher an der Batteriekontur ab als bei einer Bauweise ohne Stufe. Durch diese Anordnung kann ein frühzeitiges Brechen der Schrauben im Crash-Fall verzögert oder verhindert werden. Weiters können dadurch auch Befestigungselemente eingespart werden, und die Stufe 5 kann die fehlenden Schraubverbindungen für bestimmte Lastfälle kompensieren.

Der Deckel 3 ist mit der Oberkante der Stufe 5 des Zellenträgers 2 gasdicht verbunden, bevorzugt verschraubt.

Der Zellenträger 2 weist eine weitere Stufe 6 auf, die vom Ende der Stufe 5 aus noch weiter nach oben führt und die an der dem Fahrzeuginneren zugewandten Seite der Stufe 5 ausgebildet ist, wobei die weitere Stufe 6 an der dem Fahrzeuginneren zugewandten Seite des Deckels 3 entlang verläuft.

Der Deckel 3 ist seitlich nach unten gezogen, so dass er die Seitenwände des Batteriegehäuses ausbildet. Die Seitenwände des Deckels 3 sind unmittelbar mit dem Zellenträger 2 gasdicht verbunden.

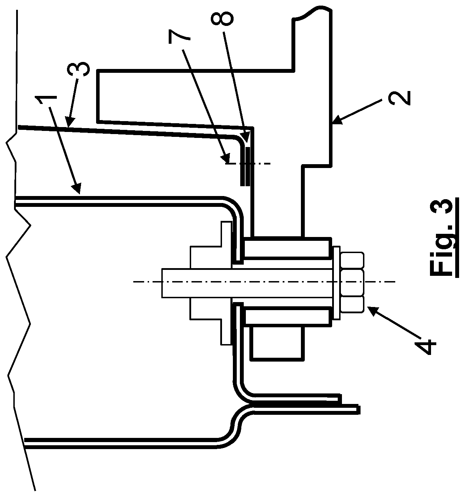

Fig. 3 zeigt eine Variante eines nicht-erfindungsgemäßen Kraftfahrzeugs, wobei das Batteriegehäuse in einen Stahlschweller 1 verschraubt ist. Die Verschraubung 4 der Batterie am Schweller 1 kann eine im Schweller 1 liegende Schweißmutter aufweisen.

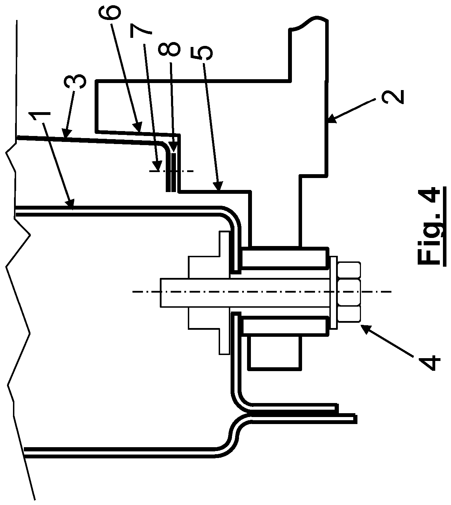

Wie in Fig. 4 dargestellt, kann eine erfindungsgemäße Stufe 5 in einem Zellenträger 2 auch in einer Befestigung einer Hochvoltbatterie an einem Stahlschweller 1 ausgebildet sein.

Ein wesentliches Merkmal dieser Erfindung ist somit eine integrierte seitliche Stufe 5, die sich bevorzugt über die gesamte Länge des Zellenträgers 2 erstreckt, der aus einem einteiligen Aluminium-Druckgussbauteil hergestellt sein kann.

Die Stufe 5 stützt dabei den Schweller 1 im Falle eines Seitencrash früher an der Batteriekontur ab als bei einer herkömmlichen Bauweise ohne Stufe. Durch diese Anordnung kann ein frühzeitiges Brechen der Schrauben durch übermäßige Materialverformung im Schwellerbereich im Crash Fall verzögert, oder verhindert werden.

Als eine Variante kann der gleiche Zellenträger 2 auch an einer Stahlkarosserie befestigt werden, die ein etwas anderes Deformationsverhalten haben kann.

### Bezugszeichenliste

- 1: Schweller
- 2: Zellenträger
- 3: Deckel
- 4: Verschraubung (Zellenträger am Schweller)
- 5: Stufe
- 6: weitere Stufe
- 7: Verschraubung (Deckel am Zellenträger)
- 8: Dichtung

## Patentansprüche

1. Kraftfahrzeug mit einer Hochvoltbatterie als Antriebsbatterie, wobei das Kraftfahrzeug zumindest einen Schweller (1) umfasst, wobei die Hochvoltbatterie ein Batteriegehäuse umfasst, wobei das Batteriegehäuse einen massiven Zellenträger (2) als Boden umfasst und einen Deckel (3) oberhalb des Zellenträgers (2), der mit dem Zellenträger (2) gasdicht verbunden ist, wobei der Zellenträger (2) des Batteriegehäuses mittels Verschraubungen (4) am Schweller (1) des Kraftfahrzeuges von unten befestigt ist,
**dadurch gekennzeichnet , dass** der massive Zellenträger (2) eine Stufe (5) ausgeformt hat, so dass die Stufe (5) an der dem Fahrzeuginneren zugewandten Seite des Schwellers (1) zumindest einen Teilbereich der Höhe des Schwellers (1) überdeckend entlangläuft, wobei der Deckel (3) zumindest auf Höhe der Oberkante der Stufe (5) mit dem Zellenträger (2) gasdicht verbunden ist.

2. Kraftfahrzeug nach Anspruch 1,
**dadurch gekennzeichnet , dass** zumindest eine, bevorzugt mehrere Verschraubungen (4), mittels welcher der Zellenträger (2) des Batteriegehäuses am Schweller (1) des Kraftfahrzeuges von unten befestigt ist, neben der Stufe (5) angeordnet sind.

3. Kraftfahrzeug nach zumindest einem der vorhergehenden Ansprüche,
**dadurch gekennzeichnet , dass** der Deckel (3) mit der Oberkante der Stufe (5) des Zellenträgers (2) gasdicht verbunden, bevorzugt verschraubt, ist.

4. Kraftfahrzeug nach zumindest einem der vorhergehenden Ansprüche,
**dadurch gekennzeichnet , dass** die Stufe (5) zumindest einen Teilbereich der Höhe des Schwellers (1) derart überdeckend entlangläuft, dass die Oberkante der Stufe (5) etwa auf der Höhe der Oberkante zumindest einer Verschraubung (4), bevorzugt mehrerer Verschraubungen (4), mittels welcher der Zellenträger (2) des Batteriegehäuses am Schweller (1) des Kraftfahrzeuges von unten befestigt ist, liegt oder höher ist.

5. Kraftfahrzeug nach zumindest einem der vorhergehenden Ansprüche,
**dadurch gekennzeichnet , dass** der Zellenträger (2) eine weitere Stufe (6) aufweist, die vom Ende der Stufe (5) aus noch weiter nach oben führt und die an der dem Fahrzeuginneren zugewandten Seite der Stufe (5) ausgebildet ist, wobei die weitere Stufe (6) bevorzugt an der dem Fahrzeuginneren zugewandten Seite des Deckels (3) entlang verläuft.

6. Kraftfahrzeug nach zumindest einem der vorhergehenden Ansprüche,
**dadurch gekennzeichnet , dass** der Deckel (3) zumindest seitlich nach unten gezogen ist, so dass er die Seitenwände des Batteriegehäuses ausbildet, wobei die Seitenwände des Deckels (3) unmittelbar mit dem Zellenträger (2) gasdicht verbunden sind.

7. Kraftfahrzeug nach zumindest einem der vorhergehenden Ansprüche,
**dadurch gekennzeichnet , dass** der Schweller (2) ein Aluminium-Druckgussbauteil ist oder dass der Schweller (2) ein Stahlbauteil ist.

8. Kraftfahrzeug nach zumindest einem der vorhergehenden Ansprüche,
**dadurch gekennzeichnet , dass** das Kraftfahrzeug in Y-Richtung sowohl links als auch rechts am Kraftfahrzeug derartige Schweller (1) aufweist und der Zellenträger (2) sowohl links als auch rechts benachbart zu den Schwellern (1) jeweils eine derartige Stufe (5), wie in zumindest einem der vorhergehenden Ansprüche beschrieben, aufweist.
